# EUROPEAN PATENT SPECIFICATION

(11) **EP 1 370 812 B1**
(45) Date of publication and mention of the grant of the patent: **08.10.2008**
(21) Application number: 01931354.3
(22) Date of filing: 24.05.2001
(51) Int. Cl.: F24J 1/00

(54) **HEATING APPARATUS**
HEIZGERÄT
APPAREIL DE CHAUFFAGE

(30) Priority: 01.06.2000 CZ 20002032
(43) Date of publication of application: 17.12.2003
(73) Proprietor: Benes, Jindrich, 140 00 Praha 4 (CZ); Benes, Martin, 140 00 Praha 4 (CZ)
(72) Inventor: Benes, Jindrich, 140 00 Praha 4 (CZ); Benes, Martin, 140 00 Praha 4 (CZ)
(74) Representative: Kratochvil, Vaclav
(86) International application number: PCT/CZ2001/000031
(87) International publication number: WO 2001/092789

(56) References cited:
- DE-A- 2 901 820
- DE-A- 19 746 799

## Description

### Technical field

The invention applies to heating apparatus, namely heating systems, which utilize a main heat source and supplement it with solar energy.

### Background of the invention

Heating systems utilizing solar energy in combination with a main heat source, which consists mostly of a gas or electrical boiler, are controlled by the temperature in the heated area. Based on the required temperature set on the temperature sensor in the heated area, the main heat source is switched on or off and the solar collector is connected or disconnected. The pre-set temperature therefore controls the utilization of the solar collector unit. After the required temperature is reached, the solar collector unit is automatically switched to secondary heat receivers, e.g. utility water reservoir, pool, etc. However, it is generally true that greater power and also financial savings are possible if the solar collector is used more for heating than for supplying heat to secondary heat receivers. This condition illustrates the main defect of known technologies, which is manifested whenever users pre-set a required temperature due to which the solar collector units often transfer heat to such appliances where it is energetically and financially less effective. A known heating apparatus of this type comprises the features of claim 1.

### Summary of the invention

The purpose of the invention is to increase the utilization of heat from solar collector units for heating. This achieved by a heating apparatus as defined in claim 1.

For heating systems consisting of a main heat source and a solar collector unit with at least one collector, the objective is met by installing a control unit in accordance to the invention, which works on the following principle: a primary temperature sensor is linked to the control unit and is set to a temperature higher than the air temperature in the heated area. A secondary temperature sensor is linked to the main heat source.

For precise and reliable management, the control unit is linked with the first three-way valve. The solar collector unit output line, the connecting line to the return line from the heating elements and the feed line to the secondary heat appliance are all linked to the first three-way valve. The control unit is also linked to the second three-way valve, which is installed in the return line leading from the heating elements. The feed line of the solar collector unit is connected to the second three-way valve. The connecting line is complemented by a check valve and returns back to the return line between the second three-way valve and the main heat source.

For ensuring correct function in case of a power shortage, the control unit is equipped with an auxiliary power source, which consists of a photovoltaic cell. The auxiliary power source is connected through the control unit to the auxiliary pump installed in the by-pass line of the main pump.

Both heat sensors for the heated area may be channelled into one unit.

This invention serves for maximal utilization of the solar collector for heating instead of utilizing it for secondary heat appliances. The heating apparatus is fully automatic and its function is ensured even during a power shortage.

### Brief description of the drawings

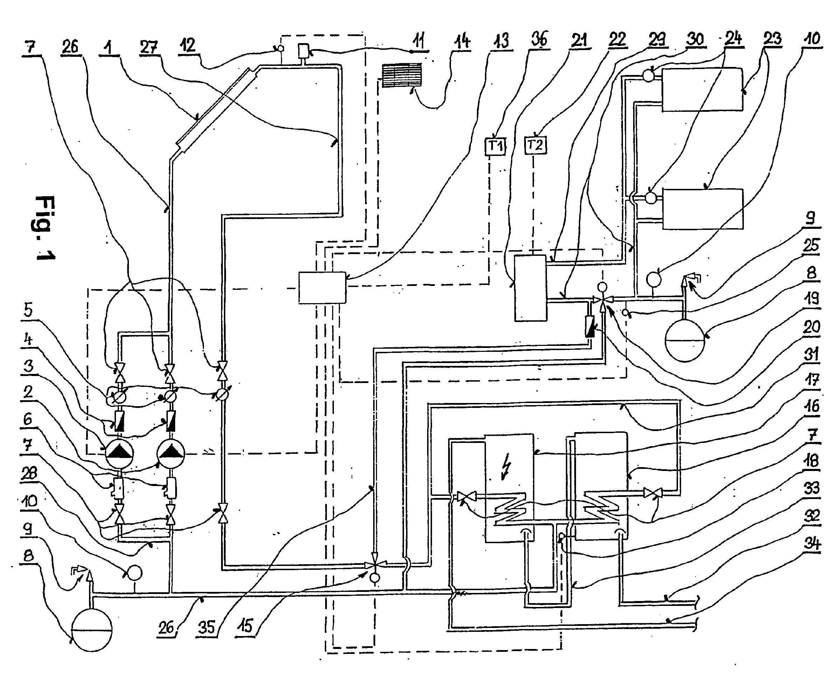

An example of the heating apparatus working in accordance to the invention is displayed in the attached drawing, which consists of one figure of the diagram of this apparatus.

### Detailed description of the preferred embodiments

A solar collector unit 1 consisting of at least one collector is connected to a first three-way valve 15 by its output line 27. The input line, **26** of the solar collector unit **1** has two shut-off valves **7**, between which a filter **6**, a main pump **2,** a flapper valve **4** and a thermometer **5** are placed. The input line **26** is furnished with a bypass line **28**, which bypasses the shut-off valves **7** and all listed elements between them, **6**, **2**, **4**, **and 5**. The bypass line **28** also has two shut-off valves **7**, between which a filter **6**, auxiliary pump **3**, flutter valve **4** and thermometer **5** is placed.

The feed line **31** is also hooked to the three-way valve **15**, which is installed before the utility water heater. A connecting line **35** is also hooked to the three-way valve **15**, which exits to a return line **30** leading from the heating elements **23** to the main heat source **21** and which is fitted with a flutter valve **20**. An output line **29** leads from the main heat source **21** to the heating elements **23**. The connecting line **35** exits into the return line **30** between the second three-way valve **19**, which is installed in the return line **30** and connected to the feed line **26** of the solar collector unit **1**, and the main heat source **21**. Thermostatic valves 24 furnish heating elements 23.

The utility water heating section includes a serial reservoir **16** connected to a utility water feed line **32** and an electrical heating reservoir **17** furnished with a release **34** of the heated utility water. The reservoirs **16** and **17** are connected by overfall utility water line **33**. The feed line **31** before each reservoir **16**, **17** is furnished by a shut-off valve **7**.

The feed line **26** of the solar collector unit **1** is furnished before the beginning of the bypass line **28** by a branch with a pressure gauge **10** and an expansion tank **8** with a safety valve **9**. The same is at the return line **30** before the second three-way valve **19**.

A purge valve **11** is installed at the highest place of the output line **27** of the solar collector unit **1**. The output line **27** also has a thermometer **5** between two shut-off valves **7**.

controller of the main pump **2**, auxiliary pump **3**, the second three-way valve **19** and the first three-way valve **15** are connected to the control unit **13**, to which is also connected the auxiliary power source **14**, e.g. a photovoltaic cell. The control unit **13** is also connected with a sensor **12** of the output temperature from the solar collector unit **1**, the sensor **25** of the temperature in the return line **30** from the heating elements **23**, the sensor **18** of the utility water temperature in the serial reservoir **16** and with the first sensor **36** of the air temperature in the heated area. The second sensor **22** of the air temperature in the heated area is connected with the control section of the main heat source **21**. The second sensor **22** has a set temperature **T2**, which is lower than temperature **T1** set on the first sensor **36**. The lower temperature **T2** will always be maintained in the heated area and is pre-set in accordance with user habits and requirements. Temperature **T1** is such a temperature, which is with this Principle, the temperatures **T1** and **T2** may be set to e.g. 23°C and 21°C. Naturally; other temperatures may be freely pre-set in accordance to Specific requirements of the users. However, temperature **T1** shall always be higher than temperature **T2**.

If the temperature in the heated area is lower than temperature **T1** set on the first sensor **36**, the control unit **13** compares the output temperature from the solar collector unit **1** measured by sensor **12** with the temperature in the return line **30** from the heating elements **23**. If the temperature in the solar collector unit **1** output is higher, the control unit **13** resets the first three-way valve **15** to position' for connecting the output line **27** with the connecting line **35** and to disconnect the feed line **31** to the utility water heating section. At the same time, the control unit **13** resets the second three-way valve **19** into position for disconnecting the return line **30** and for connecting its disconnected part with the feed line **26** of the solar collector unit **1**, and also activates the main pump **2.** The heating medium heated in the solar collector unit **1** is transported by the output line **27** through the first three-way valve **15** into the connecting line **35** and continues on through the check valve **20**, the main heat source **21** and its output line **29** to the heating elements **23**. It returns from the heating elements **23** by the return line **30** through the second three-way valve **19** to the feed line **26** and through the main pump **2** back to the solar collector unit **1**, where it is reheated. If the temperature in the heated area is lower than temperature **T2** set on the second sensor **22**, the main heat source **21** may stay activated. When temperature **T2** is reached, the second sensor **22** sends a signal to turn off the main heat source **21**.

If the temperature in the heated space is between temperatures **T1** and **T2** and if the output temperature from the solar collector unit **1** is not higher than the temperature in the return line **30** from the heating elements **23**, the system is in idle condition. The solar collector unit **1** is disconnected and the main pump **2** is turned off. The main heat source **21** is also turned off because the temperature in the heated area has not dropped below temperature **T2** set on the second sensor **22**.

If the temperature in the heated area reaches temperature **T1** set at the first sensor **36**, the control unit **13** compares the temperature difference between the solar collector unit **1** output and the serial utility water reservoir **16** temperature. If this difference is sufficient, e.g. 5°C, the control unit **13** resets the first three-way valve **15** into position for connecting the output line **27** with the feed line **31** of the utility water heating section and shuts off the connection between the output line **27** and the connecting line **35**. The output line 27 through the first three-way valve 15 into the feed line 31 transports the heating medium heated in the solar collector unit 1. Based on the position of the shut-off valves **7**, it passes through one or both utility water reservoirs **16**, **17** and heats them. It is advantageous if only the valve before the serial reservoir **16** is open. It is then possible to relay the preheated utility water through the overfall line **33** to the electrically heated reservoir **17** during its consumption, where it may be heated to the required temperature. The heating medium continues to pass through the serial reservoir **16** to the feed line **26** and the main pump 2 back to the solar collector unit **1**, where it is reheated.

If the output temperature from the solar collector unit **1** is not sufficient for heating or heating utility water, e.g. in days without sunlight, the control unit **13** shuts off the connection at the first three-way valve **15** between the output line **27** and the connecting line **35** and the feed line **31**, turns off the main pump **2** and resets the second three-way valve **19** into position for connecting both parts of the return line **30** and for shutting off the junction to the feed line **26.** Heating is then accomplished solely by the main heat source **21** controlled by the second sensor **22** of the heated area air temperature, and utility water is heated only in the reservoir **17** by electrical heating. In this regime, the check valve **20** prevents passage of the heating medium through the connecting line **35** to the first three-way valve **15**.

In case of a power shortage, the control unit **13** immediately connects to the auxiliary power source **14**, which is connected through the control unit **13** with the auxiliary pump **3.** After the end of a power shortage, the auxiliary power source **14** is immediately disconnected. This ensures that the whole system remains operable even during a power shortage.

The control unit **13** evaluates present conditions to switch between different regimes of the heating and utility water heating apparatus described above, and does so automatically.

It is also possible to reset the control unit **13** for cooling water in reservoirs **16**, **17**. Under this regime, the first three-way valve **15** connects the output line **27** with the feed line **31** even if the solar collector unit **1** output temperature is lower than the water temperature in the serial reservoir **16**. This regime is advantageous mainly in summer months, when users are not present for a longer period of time or when there is no utility water consumption.

The principle of the function of the heating system is that the solar collector unit **1** heats the heated area to temperature **T1** that is higher than temperature **T2** that is reached by the main heat source **21**. This increases the contribution of heat from the solar collector unit **1** to heating. In practice, this means that if the sun is shining, the heated area is heated to the higher temperature **T1**. The source **21** is activated after the temperature in the heated area has fallen to temperature **T2**, which is lower, that temperature **T1**.

The most effective main heat source **21** in regards to the invention consists of an electrical or gas boiler, which may be regulated easily.

Thermostatic valves **24** on every heating element **23** serve to expedite an increase in temperature in colder parts of the building, e.g. in areas oriented to the north.

The secondary heat appliance does not have to be installed serially only for utility water heating as described above, and may also serve for heating pool water or other uses.

The three-way valves **15** and **19** may consist of regular three-way valves with a rotating or sliding element, or of other technically equivalent solutions.

### Industrial applications

The system specified in the invention is aimed mainly at smaller buildings, especially family houses. If it is scaled sufficiently, it may also be used in apartment buildings, hotels, recreational buildings and other facilities.

## Claims

1. A heating apparatus for heating an area with a main heat source (21) and with a solar collector unit (1) consisting of at least one collector and having an output line (27), comprising a contol unit. (13), connected to a first sensor (36) having a first set temperature (T1) for sensing the air temperature in the heated area, heating elements (23) provided with a return line (30), and a secondary heat appliance provided with a feed line (31) ***characterized in that*** the main heat source (21) is connected to a second sensor (22) having a second set temperature (T2) for sensing the air temperature in the heated area, wherein the first set temperature (T1) is higher than the second set temperature (T2) and the control unit (13) is connected with a first three-way valve (15), to which the output line (27) of the solar collector unit (1) a connecting line (35) leading to the return line (30) from the heating elements (23) and the feed line (31) leading to the secondary heat appliance are connected.

2. A heating apparatus in accordance to claim 1, ***characterized in that*** the control unit (13) is connected with the second three-way valve (19), which is serially Installed into the return line (30) from the heating elements (23), to which the feed line (26) of the solar collector unit (1) is connected, where the connecting line (35) furnished by a check valve (20) exits into the return line (30) between the second three-way valve (19) and the main heat source (21).

3. A heating apparatus in accordance to claim 1, ***characterized in that*** the control unit (13) is connected to an auxiliary power source (14).

4. A heating apparatus in accordance to claim 3, ***characterized in that*** the auxiliary power source (14) consisting of a photovoltaic cell.

5. An apparatus in accordance to claim 3 or 4, ***characterized in that*** the auxiliary power source (14) is connected through the control unit (13) with the auxiliary pump (3) placed in the by-pass line (28) of the main pump (2).

6. An apparatus is accordance to claim 1, ***characterized in that*** the temperature sensors (36, 22) of the heated area air temperature are joined in one unit.

## Patentansprüche

1. Das Heizgerät für die Raumbeheizung mit der Hauptwärmequelle (21) und mit einer Solarkollektoreinheit (1) bestehend mindestens aus einem Kollektor und mit der Ausgangsleitung (27), umfassend die Steuereinheit (13), angeschlossen zu dem ersten Sensor (36) mit der ersten eingestellten Temperatur (T1) für die Lufttemperaturerfassung in dem beheizten Raum, Heizkörper (23) mit Rückführungen (30) und der sekundäre Wärmeverbraucher mit Versorgungsleitung (31), der sich **dadurch** bezeichnet, dass die Hauptwärmequelle (21) zu dem anderen Sensor (22) mit der anderen eingestellten Lufttemperatur (T2) in dem beheizten Raum angeschlossen ist, wobei die erste eingestellte Temperatur (T1) höher als die andere eingestellte Temperatur (T2) ist und die Steuereinheit (13) mit dem ersten Dreiwegventil (15) verbunden ist, zu dem die Ausgangsleitung (27) der Solarkollektoreinheit (1), Verbindungsleitung (35), die in die Rückleitung (30) aus den Heizkörpern (23) mündet, und die in den sekundären Heizverbraucher führende Versorgungsleitung (31)angeschlossen sind.

2. Das Heizgerät nach dem Anspruch 1, das sich ***dadurch bezeichnet***, dass die Steuereinheit (13) zu dem zweiten, in die Rückleitung von den Heizkörpern (23) seriell eingebauten Dreiwegventil (19) angeschlossen ist, zu denen die Versorgungsspannung (26) der Solarkollektoreinheit (1) angeschlossen ist, wobei die mit einem Rückschlagventil (20) versehene Verbindungsleitung (35) in die Rückleitung (30) zwischen dem zweiten Dreiwegventil (19) und der Hauptwärmequelle (21) führt.

3. Das Heizgerät nach dem Anspruch 1 ***bezeichnet sich dadurch***, dass die Steuereinheit (13) zu der Hilfsversorgungsquelle angeschlossen ist (14).

4. Das Heizgerät nach dem Anspruch 3 ***bezeichnet sich dadurch***, dass die Hilfsversorgungsquelle (14) aus einer photovoltaischen Zelle besteht.

5. Das Gerät nach dem Anspruch 3 oder 4 ***bezeichnet sich dadurch***, dass die Hilfsversorgungsquelle (14) über die Steuereinheit (13) zu der an der Umlaufleitung (28) der Hauptpumpe (2) angebrachten Hilfspumpe angeschlossen ist.

6. Das Gerät nach dem Anspruch 1 ***bezeichnet sich dadurch***, dass die Wärmesensoren (36, 22) der Luft in dem beheizten Raum in einer Einheit verbunden sind.

## Revendications

1. L'appareil chauffant pour chauffer l'espace avec la source principale de chaleur (21) et avec une unité solaire collectrice (1) composé d'au moins un collecteur et le circuit de sortie (27), intégrant l'unité de commande (13) connectée au premier palpeur (36) avec la première température réglée (T1) pour enregistrer la température de l'aire dans l'espace chauffé, résistances chauffantes (23) avec le circuit régressif (30) et l'appareil secondaire de chauffe avec le circuit d'alimentation (31). La caractéristique de ce circuit est que la source principale de chaleur (21) est connectée au deuxième palpeur (22) avec la deuxième température réglée (T2) pour enregistrer la température de l'aire dans l'espace chauffé, en étant la première température réglée (T1) plus élevée que la deuxième température réglée (T2) et l'unité de commande (13) est connecté à la première valve à trois voies (15), à laquelle sont aussi connectés les circuits de sortie (27) de l'unité solaire collectrice (1), le circuit de connexion (35) débouchant dans le circuit régressif (30) venant des résistances chauffantes (23) et le circuit d'alimentation (31) qui va dans l'appareil secondaire de chauffe.

2. L'appareil chauffant selon l'exigence 1, ***caractérisé par le fait* que** l'unité de commande (13) est connectée à la deuxième valve à trois voies (19) qui est installée en série dans le circuit régressif (30) venant des résistances chauffantes (23), auxquelles est connecté le circuit d'alimentation (26) de l'unité solaire collectrice (1), en étant le circuit de connexion (35) équipé par la valve de régression (20) qui mène dans le circuit régressif (30) entre la deuxième valve à trois voies (19) et la source principale de chaleur (21).

3. L'appareil chauffant selon l'exigence 1, ***caractérisé par le fait* que** l'unité de commande (13) est connectée à la source auxiliaire d'alimentation (14).

4. L'appareil chauffant selon l'exigence 3, ***caractérisé par le fait* que** la source auxiliaire d'alimentation (14) est composée de cellule photovoltaïque.

5. L'appareil selon l'exigence 3 ou 4, ***caractérisé par le fait* que** la source auxiliaire d'alimentation (14) est connectée à travers de l'unité de commande (13) à la pompe auxiliaire (3) située sur le circuit d'écoulement (28) de la pompe principale (2).

6. L'appareil selon l'exigence 1, ***caractérisé par le fait* que** les palpeurs de température (36, 22) de l'aire dans l'espace chauffé sont regroupés dans une seule unité.
